# EUROPÄISCHE PATENTSCHRIFT

(11) **EP 3 649 290 B1**
(45) Veröffentlichungstag und Bekanntmachung des Hinweises auf die Patenterteilung: **09.11.2022**
(21) Anmeldenummer: 18729634.8
(22) Anmeldetag: 04.06.2018
(51) Int. Cl.: E01B 29/46

(54) **VORRICHTUNG ZUM VERSCHWEISSEN EINES SCHIENENSTOSSES EINES GLEISES**
APPARATUS FOR WELDING A RAIL JOINT OF A TRACK
DISPOSITIF DE SOUDAGE D'UN JOINT DE RAIL D'UNE VOIE

(30) Priorität: 04.07.2017 AT 2782017
(43) Veröffentlichungstag der Anmeldung: 13.05.2020
(73) Patentinhaber: Plasser & Theurer Export von Bahnbaumaschinen GmbH, 1010 Wien (AT)
(72) Erfinder: MÜHLLEITNER, Heinz, 3100 Neidling (AT)
(86) Internationale Anmeldenummer: PCT/EP2018/064544
(87) Internationale Veröffentlichungsnummer: WO 2019/007599

(56) Entgegenhaltungen:
- EP-A1- 0 455 178
- EP-A1- 0 566 941
- DE-U1-202012 003 875

## Beschreibung

### Gebiet der Technik

Die Erfindung betrifft eine Vorrichtung zum Verschweißen eines Schienenstoßes eines Gleises, umfassend zwei voneinander in einer Schienenlängsrichtung distanzierte Schienenklemmvorrichtungen, die über Druckstangen miteinander verbunden sind, um Schienenenden vor einem Verschweißen auseinanderzudrücken, wobei zumindest eine Schienenklemmvorrichtung mit einer Querverschiebeeinrichtung gekoppelt ist, um die Schienenenden nach dem Auseinanderdrücken fluchtend auszurichten. Außerdem betrifft die Erfindung ein Verfahren zum Verschweißen eines Schienenstoßes mittels einer solchen Vorrichtung.

### Stand der Technik

Beim Verschweißen zweier Schienen eines Gleises kommen zunehmend mobile Schweißaggregate zum Einsatz. Anders als beim älteren Thermitschweißen erfolgt dabei die Verschmelzung der Schienenenden ohne Beigabe von Fremdmaterialien. Daraus folgt allerdings eine geringe Schienenverkürzung, die kompensiert werden muss.

In der Regel werden zunächst mehrere Schienenabschnitte mit gelösten Schienenbefestigungen verschweißt. Anschließend erhält der Schienenstrang im Zuge einer Schlussschweißung seine für die herrschende Umgebungstemperatur vorgegebene Längsspannung. Bei Temperaturen unter der mittleren Jahrestemperatur (Neutraltemperatur) kommt eine sogenannte Schienenziehvorrichtungen zum Einsatz (DE 20 2015 006 320 U1). In modernen Schweißaggregaten ist eine solche Vorrichtung bereits integriert (EP 2 315 877 A1). Bei höheren Temperaturen müssen die Schienenenden mittels zusätzlicher Vorrichtungen zunächst auseinander gedrückt werden (EP 1 682 304 A1). Aus der EP 0 455 178 A1 ist eine unabhängig von einem Schweißaggregat einsetzbare Schienenziehvorrichtung bekannt, welche Schienenklemmvorrichtungen, Druckstangen sowie Querverschiebeeinrichtungen aufweist.

Eine weitere Schienenziehvorrichtung ist aus AT 402 830 B bekannt. Dabei werden die Schienen ausgerichtet und können wahlweise zusammengezogen oder auseinander gedrückt werden. Diese Vorrichtung ist nicht in eine Schweißmaschine integriert.

Derzeit können Schweißaggregate nur dort eingesetzt werden, wo der Schienenmaterialverbrauch durch eine Längsverschiebung der Schiene ausgeglichen wird. Beim Entfernen eines alten Schweißstoßes und einem Einsetzen eines Schienenzwischenstücks ist eine Längsverschiebung bisher nicht möglich.

Für das Thermitschweißen kennt man Druck- und Ziehvorrichtungen, um die zu verschweißende Schienen mit einer vorgegebenen Längsspannung zu verschweißen (DE 42 13 288 A1). Durch einen hydraulischen Zylinder wird eine Längenänderung der Schienen bewirkt, um eine Abweichung der momentanen Schienentemperatur von der Neutraltemperatur zu kompensieren. Je nach Temperaturniveau geschieht dies durch Auseinanderdrücken oder Zusammenziehen der zu verschweißenden Schienenenden.

### Zusammenfassung der Erfindung

Der Erfindung liegt die Aufgabe zugrunde, für eine Vorrichtung der eingangs genannten Art eine Verbesserung gegenüber dem Stand der Technik anzugeben.

Erfindungsgemäß wird diese Aufgabe gelöst durch eine Vorrichtung gemäß Anspruch 1 und ein Verfahren gemäß Anspruch 8. Vorteilhafte Weiterbildungen der Erfindung ergeben sich aus den abhängigen Ansprüchen.

Die Erfindung sieht vor, dass die Querverschiebeeinrichtung Querführungen umfasst, mittels derer die Druckstangen querverstellbar geführt sind und dass die Vorrichtung als integrierte Schweißmaschine ausgebildet ist. Die eine Schienenklemmvorrichtung ist in einer ersten Schweißkopfhälfte angeordnet und die andere Schienenklemmvorrichtung ist in einer zweiten Schweißkopfhälfte angeordnet. Dadurch werden die Druckstangen samt den Schienenklemmvorrichtungen und den zwei zu verscheißenden Schienenenden fluchtend zueinander ausgerichtet, welche mittels eines Schweißaggregats miteinander verschweißt werden können, wobei eine in der Schiene aufgebaute Druckspannung auf eine durch das abbrennende Material vorgegebene Längsspannung (gleich Null bei Neutraltemperatur) reduzierbar ist. Das Schweißaggregat muss nicht erst nach dem Ausrichten auf die zu verschweißenden Schienenenden gesetzt werden, woraus sich eine große Zeit und Kostenersparnis ergibt. Die Schweißmaschine ist dabei als sogenannter Schweißkopf an einem Kranausleger eines Fahrzeugs, insbesondere eines Schienenfahrzeugs angeordnet. Die beiden Schweißkopfhälften samt Schienenklemmvorrichtungen sind mit der Querverschiebeeinrichtung gekoppelt, wobei der zugeordnete Hydraulikzylinder die Schienenenden lateral zueinander fluchtend ausrichtet.

In einer vorteilhaften Ausprägung der Erfindung ist vorgesehen, dass die Querverschiebeeinrichtung einen Hydraulikzylinder zum Aufbringen einer Querverschiebekraft umfasst. Der Hydraulikzylinder gewährleistet eine hohe Lebensdauer im Arbeitseinsatz und eine präzise Stellgenauigkeit, um die beiden Schienenenden präzise aufeinander auszurichten.

Zudem ist es vorteilhaft, wenn die Querverschiebeeinrichtung eine Abstützvorrichtung zum Abstützen gegenüber einem parallel zu den zu verschweißenden Schienenenden verlaufenden Schienenstrang umfasst. Die Abstützvorrichtung wird an dem Schienenstrang befestigt und die in Querrichtung zu verschiebende Schiene wird in einfacher Weise parallel dazu ausgerichtet.

Eine weitere vorteilhafte Ausprägung der Erfindung sieht vor, dass die Querverschiebeeinrichtung einen Auslegerarm umfasst und dass eine an dem Auslegearm befestigte Drückeinrichtung zum Querverschieben eines Schienenendes angeordnet ist. Die am Auslegerarm angeordnete Drückeinrichtung drückt das auszurichtende Schienenende soweit in Richtung des zweiten Schienenendes bis diese fluchtend zueinander ausgerichtet sind, um diese im nächsten Schritt miteinander zu verschweißen.

Dabei ist es günstig, wenn die Querführungen Gleitwellen umfassen, auf denen endseitig an den Druckstangen angeordnete Gleitblöcke gelagert sind. Auf diese Weise sind eine Schienenklemmvorrichtung mit den Gleitwellen und die andere Schienenklemmvorrichtung mit den Gleitblöcken gekoppelt. Eine solche Anordnung ist widerstandsfähig gegenüber Staub und Schmutz, zu dem es im Arbeitseinsatz kommt.

Eine andere vorteilhafte Variante sieht vor, dass die Querführungen Gleitprofile aufweisen und dass endseitig an den Druckstangen angeordnete Gleitblöcke entsprechende Gegenprofile aufweisen. Die Gleitprofile mit ihren entsprechenden Gegenprofilen stellen eine weitere widerstandsfähige, konstruktiv einfache Lösung dar.

Vorteilhaft ist auch, wenn die beiden Schweißkopfhälften mittels einer Arretierungsvorrichtung zueinander in Querrichtung fixierbar sind. Nach einer Ausrichtung der beiden Schienenenden sorgt die Arretierungsvorrichtung für eine stabile Fixierung. Zudem erhöht die Arretierungsvorrichtung die Steifigkeit der Schweißmaschine während des Schweißvorgangs.

Dabei ist es sinnvoll, wenn die Arretierungsvorrichtung einen in Schienenlängsrichtung verschiebbaren Zapfen umfasst, der an der ersten Schweißkopfhälfte angeordnet ist und wenn die zweite Schweißkopfhälfte eine Führungsstange mit einer stirnseigen Bohrung umfasst, die den Zapfen in arretierter Stellung aufnimmt. Nach der lateralen Ausrichtung der beiden Schweißkopfhälften wird der Zapfen der ersten Schweißkopfhälfte in die Bohrung der zweiten Schweißkopfhälfte geschoben.

Eine weitere vorteilhafte Ausprägung der Erfindung sieht vor, dass die Schweißmaschine als Schweißkopf zum Abbrennstumpfschweißen ausgebildet ist. Damit kann auf kleinem Raum eine energieeffiziente und qualitativ hochwertige Schweißung vorgenommen werden.

Das erfindungsgemäße Verfahren zeichnet sich dadurch aus, dass die Vorrichtung als integrierte Schweißmaschine ausgebildet ist und dass bei überlappenden Schienenenden ein Schienenende in der in einer ersten Schweißkopfhälfte angeordneten Schienenklemmvorrichtung eingeklemmt wird und das andere Schienenende in der in einer zweiten Schweißkopfhälfte angeordneten, anderen Schienenklemmvorrichtung eingeklemmt wird, dass die beiden Schienenenden bis zum Verschwinden der Überlappung auseinandergedrückt werden, dass die Schienenenden mittels der Querverschiebeeinrichtung zueinander fluchtend ausgerichtet werden und dass die Schienenenden miteinander verschweißt werden. Damit wird ein kostengünstiges Verfahren geschaffen, welches sich besonders durch eine große Zeitersparnis auszeichnet.

Insbesondere können sehr kurze Schienenstücke ausgetauscht werden. Beispielsweise ist ein mit Thermitschweißen erzeugter Schweißstoß einfach ersetzbar, indem ein wenige Meter langes Schienenstück herausgeschnitten wird. Als Ersatz wird ein geringfügig längeres Schienenstück (Schienenzwischenstück) zunächst mit einem Schnittende des Schienenstrangs verschweißt, wobei es mit dem anderen Schnittende des Schienenstrangs überlappt. Beim Verschweißen des zweiten Schienenstückendes erfolgt die erfindungsgemäße Nutzung der Überlappung zur Kompensation des Materialverbrauchs.

Bei einer Weiterbildung des erfindungsgemäßen Verfahrens werden die Schienenenden während eines Abbrennstumpfschweißvorgangs kontrolliert aufeinander zubewegt. Durch ein Zusammenpressen der beiden aufgeschmolzenen Schienenenden wird eine gewünschte Längsspannung im Schienenstrang erreicht.

### Kurze Beschreibung der Zeichnungen

Die Erfindung wird nachfolgend in beispielhafter Weise unter Bezugnahme auf die beigefügten Figuren 4 bis 9 erläutert. Figuren 1 bis 3 zeigen keine erfindungsgemäße Ausführungsform. Es zeigen in schematischer Darstellung:
- Fig. 1: Draufsicht einer Vorrichtung mit Abstützvorrichtung
- Fig. 2: Seitenansicht einer Vorrichtung mit Drückeinrichtung
- Fig. 3: Draufsicht zu Fig. 2
- Fig. 4: Draufsicht einer als Schweißkopf ausgebildeten Vorrichtung
- Fig. 5: Schweißkopfhälfte samt Querverschiebeeinrichtung
- Fig. 6: Seitenansicht des Schweißkopfs samt Arretierungsvorrichtung
- Fig. 7: Arretierungsvorrichtung mit alternativer Querführung
- Fig. 8: Detailansicht einer Querverschiebeeinrichtung mit Gleitprofilen
- Fig. 9: Seitenansicht zu Fig. 8

### Beschreibung der Ausführungsformen

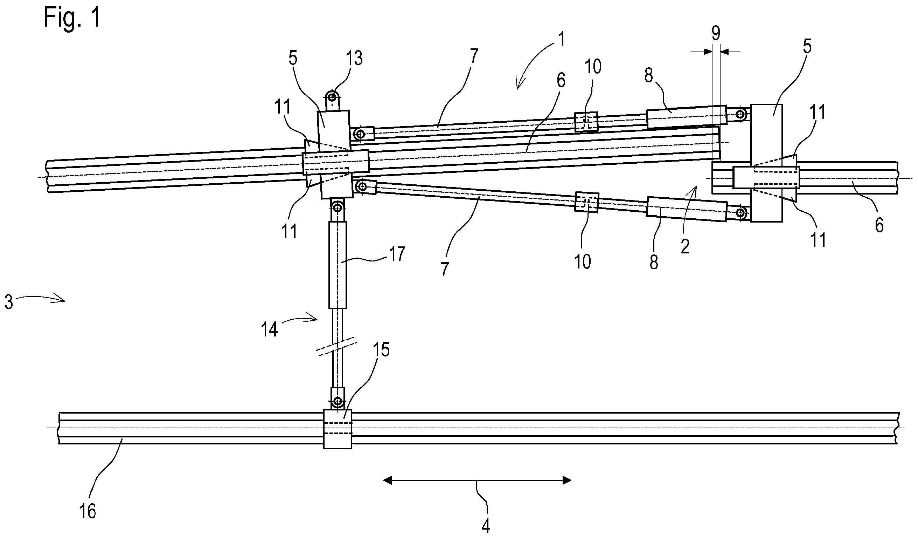

Fig. 1 zeigt eine Draufsicht einer Vorrichtung 1 zum Verschweißen eines Schienenstoßes 2 eines montierten Gleises 3, umfassend zwei voneinander in einer Schienenlängsrichtung 4 distanzierte Schienenklemmvorrichtungen 5, die jeweils ein Schienenende 6 festhalten und über zwei Druckstangen 7 miteinander verbunden sind. Jeder Druckstange 7 ist ein erster Hydraulikzylinder 8 zugeordnet, um die beiden Schienenenden 6 soweit auseinanderzudrücken, bis keine Überlappung 9 mehr vorliegt. Die Druckstangen 7 weisen jeweils eine Spannschlossmutter 10 auf, um die beiden Schienenklemmvorrichtungen 5 präzise aufeinander auszurichten.

Die jeweilige Schienenklemmvorrichtung 5 wird einfach von oben auf das zugeordnete Schienenende 6 geschoben und mit Keilen 11, die jeweils an einem Schienensteg 12 angreifen, gegen eine Verschiebung in einer Schienenlängsrichtung 4, gesichert. Die an dem zu verschiebenden Schienenende 6 angeordnete Schienenklemmvorrichtung 5 weist beidseitig eine Befestigungsöse 13 zum Anbringen einer Querverschiebeeinrichtung 14 auf. Die Querverschiebeeinrichtung 14 umfasst eine Abstützvorrichtung 15 zum Abstützen gegenüber einem parallel zu den zu verschweißenden Schienenenden 6 verlaufenden Schienenstrang 16 und einen zweiten Hydraulikzylinder 17 zum Aufbringen einer Querverschiebekraft, um die beiden Schienenenden 6 fluchtend aufeinander auszurichten.

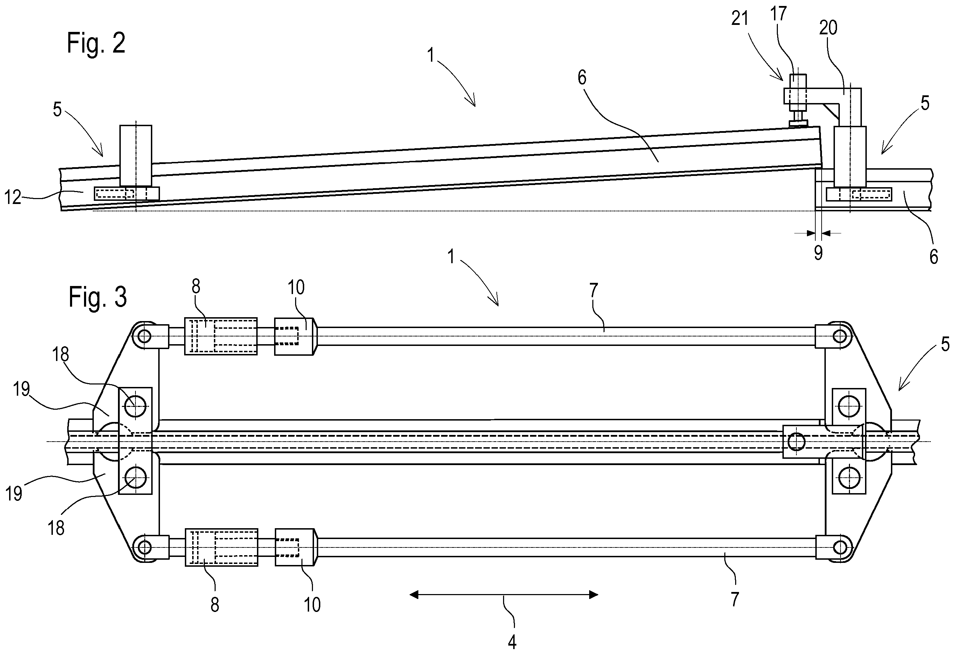

Fig. 2 und 3 zeigen eine weitere Variante der Vorrichtung 1, welche Schienenklemmvorrichtungen 5 mit um Schwenkachsen 18 verschwenkbare, am Schienensteg 12 angreifende, Klemmhebel 19 aufweist. Die Schienenklemmvorrichtungen 5 sind über normal zur Schienenlängsrichtung 4 voneinander distanzierte Druckstangen 7 miteinander verbunden. In die Druckstangen 7 sind jeweils ein erster Hydraulikzylinder 8 und eine Spannschlossmutter 10 integriert. Im Bereich der Schienenüberlappung 9 ist an der dortigen Schienenklemmvorrichtungen 5 ein Auslegerarm 20 angeordnet. An dem Auslegerarm 20 ist eine Drückeinrichtung 21 mit einem zweiten Hydraulikzylinder 17 zum Aufbringen der Querverschiebekraft befestigt. Damit werden nach dem Verschwinden der vertikalen Überlappung 9 der beiden Schienenenden 6 fluchtend ausgerichtet. Konkret drückt Drückeinrichtung 21 das aufsteigende Schienenende 6 nach unten.

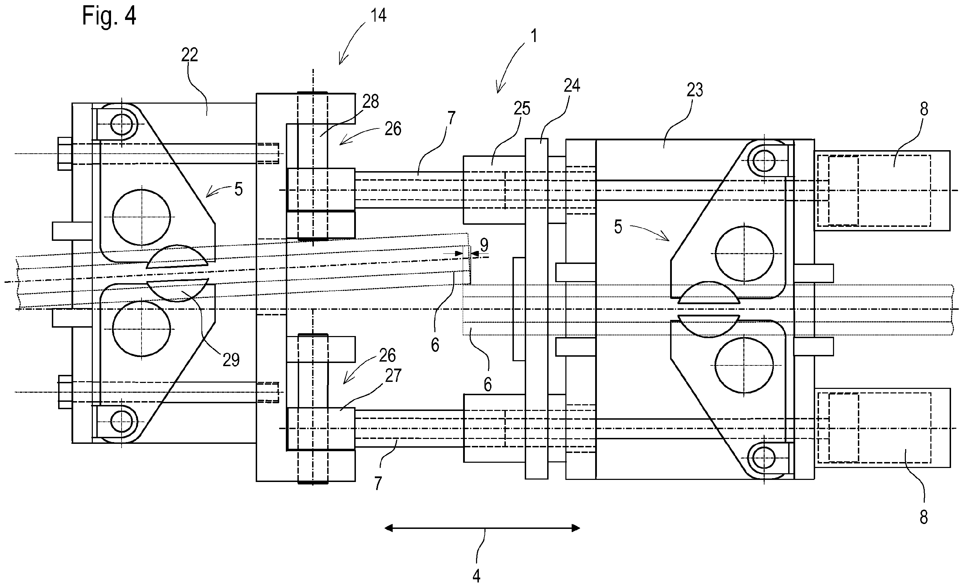

Fig. 4 zeigt eine erfindungsgemäß als Schweißmaschine ausgebildete Vorrichtung 1 mit integrierten Druckstangen 7 und integrierter Querverschiebeeinrichtung 14. Beispielsweise ist ein Schweißkopf zum Abbrennstumpfschweißen in eine erste Schweißkopfhälfte 22 und eine zweite Schweißkopfhälfte 23 aufgeteilt, in denen jeweils ein Schienenende 6 mittels einer zugehörigen Schienenklemmvorrichtung 5 verklemmt ist. Zwischen den Schweißkopfhälften ist eine Abschervorrichtung 24 zur Entfernung eines Schweißwulstes vorgesehen. An die Schienenenden 6 sind zudem nicht näher dargestellte Elektroden angepresst.

Die zweite Schweißkopfhälfte 23 ist in Schienenlängsrichtung 4 über erste Hydraulikzylinder 8 verschiebbar mittels Hülsen 25 auf den Druckstangen 7 gelagert. Um eine Überlappung 9 der Schienenden 6 zum Verschwinden zu bringen werden die Schweißkopfhälften 22, 23 samt den darin verklemmten Schienenenden 6 auseinander gedrückt.

Vor dem Verschweißen erfolgt die laterale Ausrichtung der beiden Schienenenden 6. Dazu sind als Querverschiebeeinrichtung 14 die beiden Druckstangen 7 jeweils auf einer Querführung 26 verschiebbar gelagert. In der dargestellten Variante weisen die beiden Druckstangen 7 an den Enden Gleitblöcke 27 auf, die auf Gleitwellen 28 der gegenüberliegenden ersten Schweißkopfhälfte 22 gleiten.

Die Querverschiebeeinrichtung 14 umfasst einen zweiten Hydraulikzylinder 16, um die erste Schweißkopfhälfte 22, lateral gegenüber der zweiten Schweißkopfhälfte 23 zu verschieben. Bewegliche Klemmbacken 29 der Schienenklemmvorrichtungen 5 halten dabei die auf die Schienenenden 6 wirkenden Klemmkräfte aufrecht.

Nachdem die beiden Schienenenden 6 fluchtend ausgerichtet sind, werden die beiden Schweißkopfhälften 22, 23 in Schienenlängsrichtung 4 unter Stromzufuhr zueinander verschoben. Dabei sind die ersten Hydraulikzylinder 8 entsprechend angesteuert, um zunächst zwischen den Schienenenden 6 einen Spalt zur Erzeugung eines Lichtbogens zu bewirken. Nach Erreichung einer erforderlichen Schweißtemperatur werden die Schienenenden 6 aufeinander gepresst und miteinander verschmolzen.

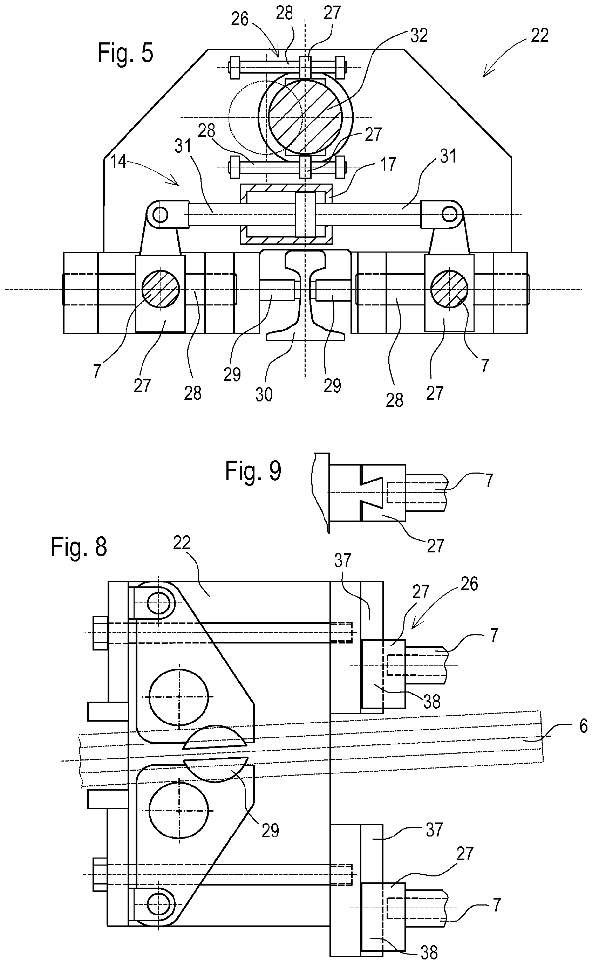

In Fig. 5 ist die erste Schweißkopfhälfte 22 mit der Querverschiebeeinrichtung 14 dargestellt. Oberhalb der in einer Ausnehmung befindlichen Schiene 30 ist der zweite Hydraulikzylinder 17 angeordnet. Über beidseitig aus dem Zylinder 17 geführte Kolbenstangen 31 wird eine Querverschiebekraft auf die an den Enden der Druckstangen 7 befestigten Gleitblöcke 27 aufgebracht. Beispielsweise ist die jeweilige Druckstange 7 in eine Gewindesackbohrung des zugeordneten Gleitblocks 27 eingeschraubt.

Zur Vermeidung von Biegespannungen in den tragenden Elementen des Schweißkopfes sind die Gleitwellen 28, die Druckstangen 7 und die Schienenklemmvorrichtungen 5 mit den Klemmbacken 29 auf einer horizontalen Ebene angeordnet. Die Aufzubringende Querverschiebekraft ist bedeutend geringer als die Druckkräfte in den Druckstangen und die Klemmkräfte. Die Biegemomente, die durch die oberhalb verlaufende Wirkachse des zweiten Hydraulikzylinders 17 hervorgerufen werden, sind deshalb vernachlässigbar.

Oberhalb der Querverschiebeeinrichtung 14 ist parallel zu den Druckstangen 7 eine Führungsstange 32 vorgesehen, um die Stabilität des Schweißkopfes zu erhöhen. Die Querschnittsmittelpunkte der Druckstangen 7 und der Führungsstange 32 bilden dabei Eckpunkten eines gleichschenkeligen Dreiecks. Zur Querverschiebung der Schweißkopfhälften 22, 23 ist Führungsstange 32 an einer Stirnseite mit einer Querführung 26 versehen. Diese umfasst beispielsweise zwei Gleitblöcke 27, die auf Gleitwellen 28 gleiten.

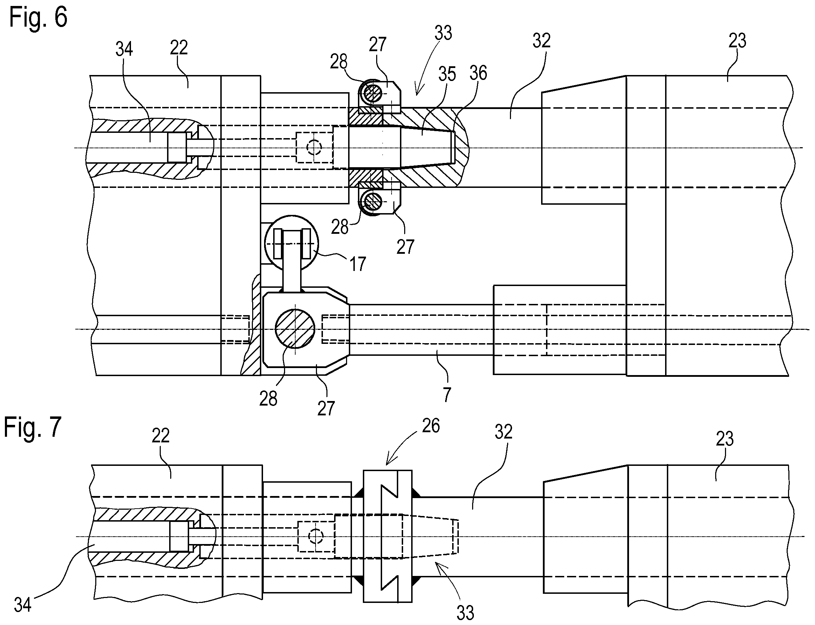

Fig. 6 zeigt eine Seitenansicht der beiden gegenüberliegenden Schweißkopfhälften 22, 23. Zur Fixierung der Führungsstange 32 im ausgerichteten Zustand ist eine Arretierungsvorrichtung 33 vorgesehen. Dabei umfasst die erste Schweißkopfhälfte 22 einen mittels eines Antriebs 34 längsverschiebbaren Zapfen 35 mit einem Außenkonus. Als Gegenelement weist die Führungsstange 32 eine stirnseitige Bohrung 36 mit einem Innenkonus auf. Sobald die beiden Schweißkopfhälften 22, 23 fluchtend ausgerichtet sind, verschiebt der Antrieb 34 den Zapfen 35 in die Bohrung 36 um eine präzise Ausrichtung der beiden Schweißkopfhälften 22, 23 beim Schweißvorgang zu gewährleisten.

Eine platzsparende alternative Querführung 26 der Führungsstange 32 ist in Fig. 7 dargestellt. Konkret sind hier an den Stirnseiten der geteilten Führungsstangen 32 Gleitplatten angeordnet, die an zugewandten Seiten eine Schwalbenschwanzführung aufweisen. Zur Fixierung im ausgerichteten Zustand ist wiederum eine Arretierungsvorrichtung 33 vorgesehen.

Fig. 8 zeigt eine alternative Querführung 26 für die Enden der Druckstangen 7. Dabei sind an der ersten Scheißkopfhälfte 22 Gleitprofile 37 angeordnet und die an den Druckstangen 7 angeordneten Gleitblöcke 27 weisen entsprechende Gegenprofile 38 auf. In Fig. 9 ist diese Querführung 26 in einer Seitenansicht dargestellt. Auch hier bilden Schwalbenschanzführungen eine platzsparende Variante.

Die erfindungsgemäße Vorrichtung eignet sich insbesondere für den Tausch kurzer Schienenstücke von wenigen Metern, beispielsweise um fehlerhafte Stellen oder Thermitschweißungen zu ersetzen. Dabei wird zunächst ein Schienenstück von ca. 2,5-5 Metern aus dem Strang herausgeschnitten. Das neu einzusetzende Schienenstück ist um zwei Schweißzugaben länger als die entstandene Lücke bei Neutraltemperatur.

Im Zuge der Verschweißung mit dem ersten Schnittende des Schienenstrangs erfolgt eine Längenreduktion um die erste Schweißzugabe und am anderen Schnittende bleibt die zweite Schweißzugabe als Überlappung 9 bestehen. Dabei wird das eingesetzte Schienenstück im elastischen Bereich nach Außen oder Innen gebogen. Bei gelösten Schienenbefestigungen (auf ca. 50m) erfolgt anschließend das Auseinanderdrücken der Schienenenden 6, bis die Überlappung 9 verschwindet.

Abschließend werden die Schienenenden 6 mittels der Querverschiebeeinrichtung 14 fluchtend ausgerichtet und die Schlussschweißung bewirkt eine Längenreduktion um die zweite Schweißzugabe. Die Schweißzugaben sind entsprechend anzupassen, wenn die Schienentemperatur von der Neutraltemperatur abweicht. Auf diese Weise ist mit dem erfindungsgemäßen Verfahren ein Ersetzen von Schienenstücken bei jeder Umgebungstemperatur möglich.

## Patentansprüche

1. Vorrichtung (1) zum Verschweißen eines Schienenstoßes (2) eines Gleises (3), umfassend zwei voneinander in einer Schienenlängsrichtung (4) distanzierte Schienenklemmvorrichtungen (5), die über Druckstangen (7) miteinander verbunden sind, um Schienenenden (6) vor einem Verschweißen auseinanderzudrücken, wobei zumindest eine Schienenklemmvorrichtung (5) mit einer Querverschiebeeinrichtung (14) gekoppelt ist, um die Schienenenden (6) nach dem Auseinanderdrücken fluchtend auszurichten, **dadurch gekennzeichnet, dass** die Querverschiebeeinrichtung (14) Querführungen (26) umfasst, mittels derer die Druckstangen (7) querverstellbar geführt sind, dass die Vorrichtung (1) als integrierte Schweißmaschine mit den Druckstangen (7) als integrierten Druckstangen (7) und der Querverschiebeeinrichtung (14) als integrierter Querverschiebeeinrichtung (14) ausgebildet ist, und dass die eine Schienenklemmvorrichtung (5) in einer ersten Schweißkopfhälfte (22) angeordnet ist und dass die andere Schienenklemmvorrichtung (5) in einer zweiten Schweißkopfhälfte (23) angeordnet ist.

2. Vorrichtung (1) nach Anspruch 1, **dadurch gekennzeichnet, dass** die Querverschiebeeinrichtung (14) einen zweiten Hydraulikzylinder (17) zum Aufbringen einer Querverschiebekraft umfasst.

3. Vorrichtung (1) nach Anspruch 1,
**dadurch gekennzeichnet, dass** die
Querführungen (26) Gleitwellen (28) umfassen, auf denen endseitig an den Druckstangen (7) angeordnete Gleitblöcke (27) gelagert sind.

4. Vorrichtung (1) nach Anspruch 1,
**dadurch gekennzeichnet, dass** die
Querführungen (26) Gleitprofile (37) aufweisen und dass endseitig an den Druckstangen (7) angeordnete Gleitblöcke (27) entsprechende Gegenprofile (38) aufweisen.

5. Vorrichtung (1) nach einem der Ansprüche 1 bis 4,
**dadurch gekennzeichnet,**
**dass** die beiden Schweißkopfhälften (22, 23) mittels einer Arretierungsvorrichtung (33) zueinander in Querrichtung fixierbar sind.

6. Vorrichtung (1) nach Anspruch 5,
**dadurch gekennzeichnet, dass** die
Arretierungsvorrichtung (33) einen in Schienenlängsrichtung (4) verschiebbaren Zapfen (35) umfasst, der an der ersten Schweißkopfhälfte (22) angeordnet ist und dass die zweite Schweißkopfhälfte (24) eine Führungsstange (32) mit einer stirnseigen Bohrung (36) umfasst, die den Zapfen (35) in arretierter Stellung aufnimmt.

7. Vorrichtung (1) nach einem der Ansprüche 1 bis 6,
**dadurch gekennzeichnet,**
**dass** die Schweißmaschine als Schweißkopf zum Abbrennstumpfschweißen ausgebildet ist.

8. Verfahren zum Verschweißen eines Schienenstoßes (2) mittels einer Vorrichtung (1) nach einem der Ansprüche 1 bis 7,
**dadurch gekennzeichnet, dass** bei
überlappenden Schienenenden (6) ein Schienenende (6) in der einen Schienenklemmvorrichtung (5) eingeklemmt wird und das andere Schienenende (6) in der anderen Schienenklemmvorrichtung (5) eingeklemmt wird, dass die beiden Schienenenden (6) bis zum Verschwinden der Überlappung (9) auseinandergedrückt werden, dass die Schienenenden (6) mittels der Querverschiebeeinrichtung (14) zueinander fluchtend ausgerichtet werden und dass die Schienenenden (6) miteinander verschweißt werden.

9. Verfahren nach Anspruch 8,
**dadurch gekennzeichnet, dass** die
Schienenenden (6) während eines Abbrennstumpfschweißvorgangs kontrolliert aufeinander zubewegt werden.

## Claims

1. A device (1) for welding a rail joint (2) of a track (3), comprising two rail clamping devices (5) spaced from one another in a rail longitudinal direction (4) which are connected to one another via push rods (7) to press rail ends (6) apart prior to welding, wherein at least one rail clamping device (5) is coupled to a transverse displacement device (14) for flush-aligning the rail ends (6) after being pressed apart **characterized in that** the transverse displacement device (14) comprises transverse guides (26) by means of which the push rods (7) are guided for a transverse adjustment, that the device (1) is designed as an integrated welding machine with the push rods (7) as integrated push rods (7) and the transverse displacement device (14) as integrated transverse displacement device (14) and that the one rail clamping device (5) is arranged in a first welding head half (22), and that the other rail clamping device (5) is arranged in a second welding head half (23).

2. A device (1) according to claim 1, **characterized in that** the transverse displacement device (14) comprises a second hydraulic cylinder (17) for applying a transverse displacement force.

3. A device (1) according to claim 1, **characterized in that** the transverse guides (26) have gliding shafts (28) on which gliding blocks (27) arranged at the ends of the push rods (7) are mounted.

4. A device (1) according to claim 1, **characterized in that** the transverse guides (26) have gliding profiles (37), and that gliding blocks (27) arranged at the ends of the push rods (7) have corresponding counter-profiles (38).

5. A device (1) according to one of claims 1 to 4, **characterized in that** the two welding head halves (22, 23) can be fixed relative to one another in the transverse direction by means of a locking device (33).

6. A device (1) according to claim 5, **characterized in that** the locking device (33) comprises a pin (35), displaceable in the rail longitudinal direction (4), which is arranged on the first welding head half (22), and that the second welding head half (24) has a guide rod (32) with a front-end bore (36) which receives the pin (35) in the locked position.

7. A device (1) according to one of claims 1 to 6, **characterized in that** the welding machine is designed as a welding head for flash-butt welding.

8. A method for welding a rail joint (2) by means of a device (1) according to one of claims 1 to 7, **characterized in that,** with the rail ends (6) overlapping, one rail end (6) is clamped in the one rail clamping device (5) and the other rail end (6) is clamped in the other rail clamping device (5), that the two rail ends (6) are pressed apart until there is no more overlapping (9), that the rail ends (6) are flush-aligned with one another by means of the transverse displacement device (14), and that the rail ends (6) are welded to one another.

9. A method according to claim 8, **characterized in that** the rail ends (6) are moved towards one another in a controlled manner during a flash-butt welding procedure.

## Revendications

1. Dispositif (1) de soudage d'un joint de rail (2) d'une voie ferrée (3), comprenant deux dispositifs de serrage de rail (5) écartés l'un de l'autre dans une direction longitudinale de rail (4) qui sont connectés l'un à l'autre par le biais de tiges de compression (7) pour écarter des extrémités de rail (6) avant un soudage, dans lequel au moins un dispositif de serrage de rail (5) est couplé à une installation de coulissement transversal (14) pour aligner à fleur les extrémités de rail (6) après l'écartement, **caractérisé en ce que** l'installation de coulissement transversal (14) comprend des guides transversaux (26) au moyen desquels les tiges de compression (7) sont guidées de manière à pouvoir être déplacées transversalement, que le dispositif (1) est réalisé en tant que machine à souder intégrée avec les tiges de compression (7) en tant que tiges de compression intégrées (7) et l'installation de coulissement transversal (14) est réalisée en tant qu'installation de coulissement transversal intégrée (14), et qu'un des dispositifs de serrage de rail (5) est disposé dans une première moitié de tête de soudage (22) et que l'autre dispositif de serrage de rail (5) est disposé dans une seconde moitié de tête de soudage (23).

2. Dispositif (1) selon la revendication 1, **caractérisé en ce que** l'installation de coulissement transversal (14) comprend un second cylindre hydraulique (17) pour l'application d'une force de coulissement transversal.

3. Dispositif (1) selon la revendication 1, **caractérisé en ce que** les guides transversaux (26) comprennent des arbres coulissants (28) sur lesquels sont logés des blocs coulissants (27) disposés du côté de l'extrémité sur les tiges de compression (7).

4. Dispositif (1) selon la revendication 1, **caractérisé en ce que** les guides transversaux (26) présentent des profils coulissants (37) et que des blocs coulissants (27) disposés du côté de l'extrémité sur les tiges de compression (7) présentent des profils conjugués correspondants (38).

5. Dispositif (1) selon une des revendications 1 à 4, **caractérisé en ce que** les deux moitiés de tête de soudage (22, 23) peuvent être fixées l'une par rapport à l'autre dans la direction transversale au moyen d'un dispositif de blocage (33).

6. Dispositif (1) selon la revendication 5, **caractérisé en ce que** le dispositif de blocage (33) comprend un tourillon (35) pouvant être coulissé dans la direction longitudinale de rail (4) qui est disposé sur la première moitié de tête de soudage (22) et que la seconde moitié de tête de soudage (24) comprend une tige de guidage (32) avec un alésage côté frontal (36) qui reçoit le tourillon (35) en position bloquée.

7. Dispositif (1) selon une des revendications 1 à 6, **caractérisé en ce que** la machine à souder est réalisée en tant que tête de soudage pour le soudage par étincelage.

8. Procédé de soudage d'un joint de rail (2) au moyen d'un dispositif (1) selon une des revendications 1 à 7, **caractérisé en ce que** dans le cas d'extrémités de rail chevauchantes (6), une extrémité de rail (6) est coincée dans un des dispositifs de serrage de rail (55) et l'autre extrémité de rail (6) est coincée dans l'autre dispositif de serrage de rail (5), que les deux extrémités de rail (6) sont écartées jusqu'à disparition du chevauchement (9), que les extrémités de rail (6) sont alignées à fleur l'une par rapport à l'autre au moyen de l'installation de coulissement transversal (14) et que les extrémités de rail (6) sont soudées l'une à l'autre.

9. Procédé selon la revendication 8, **caractérisé en ce que** les extrémités de rail (6) sont déplacées l'une vers l'autre de manière contrôlée pendant un processus de soudage par étincelage.
